# EUROPEAN PATENT APPLICATION

(11) **EP 3 480 402 A1**
(43) Date of publication of application: **08.05.2019**
(21) Application number: 18202702.9
(22) Date of filing: 25.10.2018
(51) Int. Cl.: E05F 11/38

(54) **WINDOW GLASS HOLDING STRUCTURE**

(30) Priority: 02.11.2017 JP 2017212852
(71) Applicant: TOYOTA JIDOSHA KABUSHIKI KAISHA, Toyota-shi, Aichi-ken, 471-8571 (JP)
(72) Inventor: SUZUKI, Nobuhiko, TOYOTA-SHI, AICHI-KEN, 471-8571 (JP)
(74) Representative: Cabinet Beau de Loménie

(57) **Abstract**

There is provided a window glass holding structure that holds window glass (12) that moves upwards and downwards in a vehicle. The window glass holding structure includes a carrier plate (24) that is fixed to a window glass (12), and a guide rail (26) that is fixed to a vehicle panel, extends in the vertical direction of the vehicle, and guides movement of the carrier plate (24) in a vertical direction of the vehicle. The carrier plate (24) has a holding section (40) that grips one end, in the vehicle longitudinal direction, of the guide rail (26), capable of sliding from the vehicle longitudinal direction, and has a gap in the vehicle width direction.

## Description

### CROSS REFERENCE TO RELATED APPLICATION

The entire disclosure of Japanese Patent Application No. 2017-212852 filed on November 2, 2017 including the specification, claims, drawings, and abstract is incorporated herein by reference in its entirety.

### TECHNICAL FIELD

The present disclosure relates to a window glass holding structure that holds window glass that moves upwards and downwards in a vehicle.

### BACKGROUND

Window glass of a vehicle is often provided so as go up and down in a door (opening and closing of a window). As a rising and falling mechanism for this window glass a window regulator is known, having guide rails that extend in the vertical direction, with movement of the window glass being guided by the guide rails. Window glass is also held by a guide mechanism called a glass run that is positioned on both sides in the vehicle longitudinal direction.

In patent literature 1 movement of a window is guided by a slider that is provided on the window glass sliding within a glass run.

### CITATION LIST

### PATENT LITERATURE

PATENT LITERATURE 1: JP 1994-137024-A

### SUMMARY

### TECHNICAL PROBLEM

Here, due to installation errors of the guide rails of the window regulator and the window, there is a possibility of offset in relative position between the window glass and the glass run occurring, and it becoming no longer possible to ensure smooth movement of the window. There is therefore a problem in that if smooth movement is ensured by having leeway in the glass run, the width of the glass run will become large and it is likely that the window glass will rattle.

With this disclosure, smooth movement is ensured while suppressing rattling of the window glass.

### SOLUTION TO PROBLEM

This disclosure provides a window glass holding structure that holds window glass that moves up and down in a vehicle, comprising a carrier plate fixed to the window glass, and a guide rail that is fixed to a panel on the side of the vehicle, that extends in the vertical direction of the vehicle, and that guides movement of the carrier plate in the vertical direction of the vehicle, wherein the carrier plate has a holding section that grips one end, in the vehicle longitudinal direction, of the guide rail, capable of engaging slidably from the vehicle longitudinal direction, and holds the carrier plate with a margin in the vehicle width direction.

Also, the one end of the guide rail has a vehicle width direction leg that extends in the vehicle width direction, and a longitudinal direction edge section that extends from a tip of the vehicle width direction leg in the vehicle longitudinal direction and then terminates, and the holding section of the carrier plate may have a gripping section that grips the vehicle width direction leg capable of sliding from a vehicle longitudinal direction, and a pair of restricting walls positioned to have a given gap at both sides of the longitudinal direction edge section in the vehicle width direction, and that regulate vehicle width direction movement of the longitudinal direction edge section. Also, a window glass side regulating wall, of the pair of regulating walls, may be formed at a vehicle interior side surface of the carrier plate, with a slit that extends in the vertical direction being formed in a vehicle interior side regulating wall, of the pair of regulating walls, and side walls of this slit forming the gripping section.

### ADVANTAGEOUS EFFECTS OF INVENTION

With this disclosure, smooth movement is ensured while suppressing rattling of the window glass. Since the guide rail is held keeping the holding section at a distance, it is possible to absorb variation in relative position between the window glass and the glass run.

### BRIEF DESCRIPTION OF THE DRAWINGS

Fig. 1 is a schematic diagram showing the structure of a door having a window glass holding structure of an embodiment.
Fig. 2 is a drawing schematically showing a II-II cross section in Fig. 1.
Fig. 3 in an enlarged view of a main part of Fig. 2.

### DESCRIPTION OF EMBODIMENTS

Embodiments of the present invention will be described in the following based on the drawings. It should be noted that the present invention is not limited to the embodiments described herein.

### <Structure of Door>

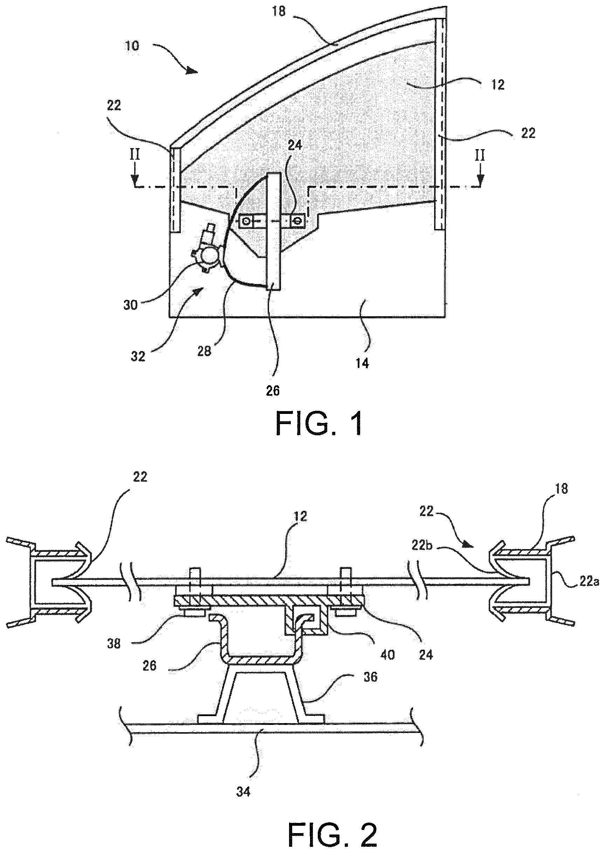

Fig. 1 is a schematic diagram showing the structure of a door having a window glass holding structure of an embodiment.

A vehicle door 10 has a front end, for example, attached to a vehicle body by means of a hinge. A space is formed below the door 10 by an inner panel and an outer panel, and it is possible to house the window glass 12 in this space. The inner panel has been omitted from the drawing, which shows an inner side (vehicle compartment side) of the outer panel 14.

An upper part of the outer panel 14 is removed to constitute an opening for a window, and the window glass 12 moves up and down in this opening. A doorframe 18 extends from upper ends of vehicle side front and rear ends of the outer panel 14, in a shape that surrounds the window, and the window is closed when the window glass 12 has been moved to the uppermost point.

A glass runs 22 that hold outer edges of the window glass 12 are provided in window side (inner side) edge parts of the doorframe 18. It should be noted that in the drawing only portions of the glass run 22 that extend vertically at the front part and rear part of the doorframe 18 are shown.

A carrier plate 24 is fixed to a lower part of the window glass 12, and this carrier plate 24 moves up and down guided by the guide rail 26. The guide rail 26 is fixed to an inner panel, and guides the carrier plate 24 with a member that has a U-shaped cross-section in a horizontal direction and extends vertically, at the time of moving the window glass 12 between the uppermost point and the lowermost point.

A drive unit 30 is connected to the carrier plate 24 by a wire 28. The drive unit 30 includes an electric motor, for example, and moves the wire 28 in both directions. The wire 28 is configured so as to move (rise and fall) vertically along the guide rail 26. As a result, the carrier plate 24 is moved vertically along the guide rail 26 in accordance with movement of the wire 28. In this way, the window glass 12 is moved up and down by driving the drive unit 30. Here, an elevating mechanism of the window glass 12 that includes the carrier plate 24, guide rail 26, wire 28 and drive unit 30 is called a window regulator 32. It should be noted that apart from the window glass 12 and the glass run 22, the door 10 is basically constructed of metal such as steel or the like.

### <Window Glass Holding Structure>

Fig. 2 schematically shows a II-II cross section in Fig. 1. A bracket 36 is fixed to the inner panel 34 of the door 10, and the guide rail 26 is fixed to this bracket 36. The bracket 36 has a U-shaped (U-shape opening at the inner panel 34 side) horizontal cross section, and leg portions of the bracket 36 are fixed to the inner panel 34 by welding or the like. The bracket 36 is comparatively short in the vertical direction, and it would better to arrange brackets, for example, at about the upper part, lower part, and center part of the guide rail 26, but it may be sufficient to have a bracket at only a single position.

A rear part of the U-shape of the bracket 36 is fixed by welding or the like to a rear part of the U-shape of the guide rail 26. Accordingly, the guide rail 26 has a U-shape that opens outward while the bracket 36 has a U-shape that opens inward.

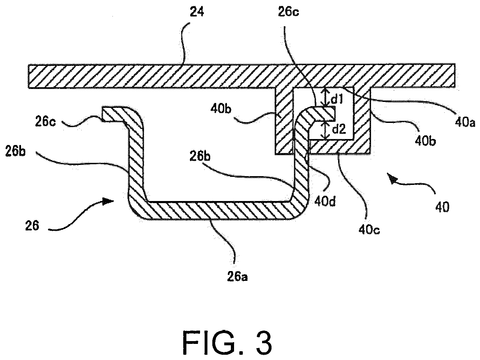

As shown in Fig. 3, the guide rail 26 has a pair of vehicle width direction legs 26b that extend from both ends of the rear section 26a of the guide rail towards the outside in the vehicle width direction, with tip ends of the vehicle width direction legs 26b being extended in the longitudinal direction and then terminated to constitute longitudinal direction edge sections 26c htat define free ends of the guide rail 26. Specifically, the guide rail 26 has the rear section 26a, vehicle width direction legs 26b that extend in the vehicle width direction at both ends of the rear section as side end sections, and longitudinal direction edge sections 26c at the tips of the vehicle width direction legs. The guide rail 26 has a length that is sufficient for guiding a raising and lowering range of the window glass 12.

On the other hand the carrier plate 24 is fixed to the window glass 12 using bolts 38. The carrier plate 24 is a rectangular plate member, with both end parts being fixed widthways to the window glass 12 by bolts 38.

Then, as shown in Fig. 3, a holding section 40 is formed on an opposite side of the carrier plate 24 to the window glass 12, having a square frame horizontal cross section and opening vertically. Specifically, the holding section 40 has a shape that encompasses the rear surface (vehicle compartment side) 40a of the carrier plate 24, and comprises a pair of side walls 40b that extend at right angles from the rear surface 40a of the carrier plate 24, and a rear wall 40c that is positioned between the tips of the pair of side walls 40b. A slit 40d that extends vertically is formed in part of the rear wall 40c of the holding section 40, and a vehicle width direction leg 26b of the guide rail 26 is positioned passing through this slit 40d. Accordingly, the holding section 40 holds one end of the guide rail 26, and both side walls of the slit 40d of the carrier plate 24 function as a gripping section that slidably grips a vehicle width direction leg 26b, with the carrier plate 24 being guided by the vehicle width direction leg 26b of the guide rail 26. It should be noted that a resin bush may be appropriately arranged on both side walls (both sides of the vehicle width direction legs 26b) of the slit 40d. Also a single holding section 40 is provided and one end of the guide rail 26 held, but two holding sections may also be provided and both ends of the guide rail held.

The longitudinal direction edge section 26c of the guide rail 26 is positioned within the holding section 40 having a space with respect to the rear surface 40a and the rear wall 40c of the carrier plate 24. For example, gaps between the longitudinal direction edge section 26c and the rear surface 40a and the rear wall 40c (d1 and d2) are preferably each about 1-2 mm, and more preferably designed to be about 1.5mm. The rear surface 40a and the rear wall 40c function as a regulating wall that regulates movement of the guide rail 26 of more than a given amount in the vehicle width direction, but since there is a gap to the longitudinal direction edge section 26c a margin arises in the vehicle width direction of the guide rail 26 even if there is installation error etc.

Also, front and rear ends of the window glass 12 are held by the glass run 22. This glass run 22 is made of rubber or plastic, for example, and side ends of the window glass 12 are held from both sides. Specifically, the glass run 22 is structured in such a manner that, on each of a pair of open tip ends of a body section 22a having a U-shaped horizontal cross section, a short arcuate part 22b that extends toward the inner side of the U-shape, namely toward an inner side of the opening of the body section 22a, is connected. Because a gap between the pair of short arcuate parts 22b becomes smaller towards the back (inner side part of the body sections 22a), the tips of the arcuate sections come into contact with each other. Side edge sections of both surfaces of the window glass 12 are therefore pressed on by the elastic force of the two short acuate parts 22b.

With this embodiment, width of the sections of the glass run 22 gripping the window glass 12 is made comparatively small, and the window glass 12 is held tightly. As a result positon of the window glass 12 in the vehicle width direction is basically regulated by the glass run 22. Since, the above described holding section 40 has a margin in the vehicle width direction, no problem arises with respect to the guide rail 26 even if relative position of the window glass 12 and the guide rail 26 in the vehicle width direction is determined with position of the window glass 12 as a reference. It should be noted that the glass run 22 is held wrapping around inside the doorframe 18.

With such a structure, it is possible to ensure smooth movement of the window glass 12 while suppressing rattling. Specifically, even in a case where there is variation in relative position between the window glass 12 and the glass run 22, since the carrier plate 24 grips the guide rail 26 in a manner engaged slidably in the vehicle longitudinal direction, the carrier plate 24 holds the guide rail with a given gap in the vehicle width direction, while regulating movement of the window glass 12 in the longitudinal direction. As a result, the above described variation in the relative position is absorbed, and it is possible to ensure smooth movement of the window glass 12 while suppressing rattling of the window glass 12.

### REFERENCE SIGNS LIST

10 door
12 window glass
14 outer panel
18 door frame
22 glass run
22a body section
22b short acuate part
24 carrier plate
26 guide rail
26a rear section
26b vehicle width direction leg
25c longitudinal direction edge section
28 wire
30 drive unit
32 window regulator
34 inner panel
136 bracket
39 bolt
40 holding section
40a rear surface
40b side wall
40c rear wall
40d Slit

## Claims

1. A window glass holding structure that is configured to hold a window glass (12) that moves up and down in a vehicle, comprising:
a carrier plate (24) adapted to be fixed to a window glass (12), and
a guide rail (26) that is adapted to be fixed to a panel on the side of a vehicle, so as to extend in a vertical direction of the vehicle, and that guides movement of the carrier plate (24) in the vertical direction of the vehicle,
wherein
the carrier plate (24) comprises a holding section (40) that grips one end, in the longitudinal direction of the vehicle, of the guide rail (26), said holding section (40) slidably gripping the one end of the guide rail from the vehicle longitudinal direction, and keeps a gap between the carrier plate (24) and the guide rail (26) in the vehicle width direction.

2. The window glass holding structure of claim 1, wherein
the one end of the guide rail (24) has a vehicle width direction leg that extends in the vehicle width direction, and a longitudinal direction edge section (26c) that extends from a tip of the vehicle width direction leg in the vehicle longitudinal direction and then terminates, and
the holding section (40) of the carrier plate has a gripping section configured to grip the vehicle width direction leg capable of sliding from a vehicle longitudinal direction, and a pair of regulating walls positioned to have a given gap at both sides of the longitudinal direction edge section (26c) in the vehicle width direction, and that regulate vehicle width direction movement of the longitudinal direction edge section (26c).

3. The window glass holding structure of claim 2, wherein:
a window glass side regulating wall (40a, 40c), of the pair of regulating walls (40a, 40c), is formed at a vehicle interior side surface of the carrier plate (24), with a slit that extends in the vertical direction being formed in a vehicle interior side regulating wall (40a, 40c), of the pair of regulating walls (40a, 40c), with both sides of this slit forming the gripping section.
